# EUROPEAN PATENT SPECIFICATION

(11) **EP 2 708 143 B1**
(45) Date of publication and mention of the grant of the patent: **06.12.2017**
(21) Application number: 12184539.0
(22) Date of filing: 14.09.2012
(51) Int. Cl.: A23K 10/00, A23K 10/20, A23K 50/00

(54) **Edible pet chew**
Essbarer Kauartikel für Haustiere
Accessoire comestible à mâcher pour animal domestique

(43) Date of publication of application: 19.03.2014
(73) Proprietor: Shanghai Sunlight Electronic Weighing Apparatus Co., Ltd, Shanghai 200001 (CN)
(72) Inventor: Xu, Guangqiang, Shanghai 200001 (CN)
(74) Representative: Vidon Brevets & Stratégie

(56) References cited:
- US-A- 5 827 565
- US-A1- 2011 265 732
- US-A1- 2012 079 992
- US-B1- 6 180 161
- US-B1- 6 277 420
- US-B2- 7 677 203

## Description

### Background of the Present Invention

### Field of Invention

The field of this invention relates to an Edible Pet Chew.

### Description of Related Arts

Domestic pets, primarily dogs, have an instinct to chew which keeps their teeth healthy, exercises their jaws and teeth and keeps teeth clean. "Pet Chew" products have been introduced to the market for many years to accommodate that instinctive urge to chew in a healthy direction.

"Pet Chews" are intended to be chewed by a pet/dog for an extended period of time, being distinguished from "pet treats". "Pet treats" are intended to be chewed by a pet/dog for a relatively short period of time and digested.

One existing important category of a typical Edible "Pet Chew" is the ones that are made of animal skin, for example Rawhide/Porkhide sheet. Of these types of pet chew, "rawhide sheet" is a commonly used material which is thin, chewy, malleable and long-lasting for chewing. With these excellent properties/characteristics, "rawhide sheet" is extremely extensively used to produce dog chews in existing market creating thousands of "rawhide" dog chew products. One specific such pet chew is disclosed in U.S. Pat. No. 2,988,045 to Fisher. This pet chew includes a rolled and knotted sheet of rawhide resembling a bone shape. To make the bone shape, a sheet of wet rawhide is rolled into a cylindrical form, and while the rawhide is still wet, two the ends are knotted to simulate an animal joint. Then the rolled and knotted rawhide is dried and hardened.

Pet Chew consisting solely of rawhide/porkhide sheets may be chewed for sufficient long time and can be digested. However, many dogs find these pet chews lack of substantial flavor and scent. Accordingly, many dogs lose interest with these rawhide pet chews after a while and will at most only chew on them for short periods of time. Some existing products consisting solely of rawhide/porkhide are improved by adding additional flavorings, for example artificial peanut flavor, into the rawhide after it is hardened, but it can not improve the palatability of rawhide significantly.

U.S. Pat. No. 5,673,653 discloses an edible pet chew wrapping jerky with rawhide, so as to attract pets to chew. It finds a good way to make the pet chews made of rawhide/porkhide sheet quite attractive to pets/dogs, improving its palatability to pets. But since it still has a big member of rawhide/porkhide in the finished products as outer layer, it unfortunately is not thought to overcome the other two disadvantages that rawhide/porkhide have as described below.

The other two disadvantages of Pet Chew consisting of solely or partially rawhide/porkhide are as follows. Firstly, environmental pollution. It is concerned by many people that manufacture of rawhide is relatively unregulated industry. Producing the raw material of rawhide is known to use a bunch of chemicals and therefore generate evident pollution during its splitting, cleaning, washing and bleaching processes. The water system may also be harmed and polluted accordingly. Secondly, detrimental residues in rawhide from primary processing. When primarily processing rawhide, lime solution, NH4CL, H2O2, and NaOH may be used during its splitting, cleaning, washing and bleaching processes and may remain in some finished products more or less. These chemicals are not good for pets' health. For example, excessive H2O2 will cause the pets vomit or even worse symptom. What' s more, heavy metals, for example lead may also remain in the rawhide and accumulate in the body, which cause serious damage to the pets' health. These concerns encourage a perception for pets/dogs owners to look for alternative ways to provide a "pet chew" for a pet without the use of rawhide/porkhide.

In another category of "pet treat" , there are animal meat product lines, typically, chicken jerky, pork jerky and beef jerky. It is known to all that pets, primarily dogs welcome meat jerky very much. The range may cover dried products, including animal meat, such as chicken, pork, beef, duck meat, goose, turkey meat, poultry meat, fish and animal pizzle, animal viscera, such as liver, lung, and heart, etc. Typical processing of meat jerky is, simply obtain meat from slaughtered animals, add additives (for example salt, sugar, preservatives), then dry it. However, one disadvantage of these jerky products is, after meat being obtained from animals, inherent "inner structure" of the raw meat is not modified or changed before making the finished meat products, and therefore finished products can only present in a form of the original raw meat. As a result, the finished products have limited shapes/forms and can not be formed into various shapes welcome by the pets or the pet owners. Some of these jerky products are made of sliced meat, being sliced thin enough looking like a "sheet" and then added with simple additives (for example salt, sugar). But these "sheets" do not have the essential properties/characteristics that "rawhide" has. These jerky sheets are fragile, crisp, and not chewy, unlike rawhide. Therefore manufacturers do not use them to form the finished products that "rawhide sheet" is always formed to. Another disadvantage is, these meat lines are always classified as "pet treat" , which means they are intended to be chewed by a pet/dog for a relatively short period of time before being fully digested, unlike "pet chews" .

Some other pet chew manufacturers do modify the inherent inner structure of raw meat by for example grinding before forming them into finished products. But in following manufacturing steps, they do not add proper additives (for example, proper thickeners, stabilizer, gelatinizer and emulsifier) into the ground meat material. Therefore the manufacturers do not use them to form a "sheet" like "rawhide" and they don' t use them to make products that "rawhide" is always formed to. They even never think of or they don' t know that ground "meat" composition with proper additives can be formed to a "sheet" simulating the characteristic and function of rawhide as a pet chew material.

U.S. Pat. No. 7,677,203 discloses an edible pet chew against U.S. Pat. No. 5,673,653, replacing the rawhide with a "plant based" material, so as to avoid pollution and health damage. However, since dogs are carnivorous, the plant based material does not attract pets much. Although flavoring can be added into the material, the edible pet chew is still less attractive to dogs since dogs do not prefer vegetal material. Furthermore, compared to plant based food, bodies of the pets, especially dogs, more fit nutrition provided by animal based food, and their digestive system more fits animal based food, such as meat. Therefore, the "plant based" edible pet chew is not considered to be so sufficient to pets' health. Another existing pet chew made from plant material is the one made from a molded wheat based material with glycerin, gelatin, monoglycerides of edible fatty acid and natural flavor. It also contains chlorophyll intending to improve dogs' breath. This molded plant material composite is molded into an elongated shape with one end shaped like a toothbrush head and an opposite end shaped like an epiphysis i.e. end of a long bone. However, this pet chew formed from main ingredients of plant also has the same foresaid disadvantages.

U.S. Pat. Application Pub. No. US 2012/079992 A1 (Chen Zuxi) filed on 5th Apr. 2012 disclosed a pet chew product comprises an outer layer which includes 28-49 percent plant-based material, at least 30 percent meat-based material and at least 20 percent animal hide-based material. However, its specification fails to define what the "plant/meat/hide based material" are and what formula of the compositions of plant/meat/hide based material respectively are. It fails to teach how many percentages of plant ingredient, meat ingredient and animal hide ingredient exactly exist in the outer layer member. its specification is indefinite with what exact formula the outer layer member of the pet chew is formed from. In additional, it teaches the outer layer includes over 20% animal hide based material, which may lead to too much animal hide existing in the outer layer formula. As mentioned above, rawhide material has various disadvantages for example lacks of attraction to dogs, environment pollution and detrimental residues after processing harmful to dogs' health. Too much animal hide existing in the outer layer will incur a high risk of the above-mentioned disadvantages to the edible pet chew product.

U.S. Pat. Application Pub. No. US 6 277 420 B1 (Andersen David B) filed on 21st Aug. 2001 in its Claim 1 disclosed a chew for domestic and animals consisting of a hollow outer fraction of rawhide and an inner fraction of shelf-stable meaty filling; the ratio by volume of the rawhide portion to the meaty filling being 25-75% to 75% to 25% respectively. It also disclosed in its Claim 11 that modified food starch is added to the meaty filling to facilitate its heat set. However, it fails to teach the meaty filling has the feature of a specific configuration of "chewy sheet", which makes it fail to simulate the property of known rawhide sheet. In addition, it is indefinite with formula of the meaty filling in its Specification. It fails to teach how many percentages of "meat" ingredient and how many percentages of "plant" ingredient exist in the meaty filling formula.

Accordingly, what is needed is an improved Edible Pet Chew that is formed from " meat based material " sheet simulating the property and function of rawhide/porkhide sheet, which is chewy and long-lastingly chewing for pets/dogs. It is needed to overcomes the problems and disadvantages of the prior art.

### Summary of the Present Invention

An objective of the present invention is to create an edible pet chew for domestic pets, e.g., dogs, which overcomes the drawbacks of existing pet chews.

Another objective of the present invention is to provide an edible pet chew formed from long-lasting chewy sheet for dogs stimulating the property/characteristics/functions of known rawhide but with different materials intending to satisfy dogs' instinctive urge to chew, exercise their jaws and reduce the tartar on teeth of the dogs while chewing it.

Another object of the present invention is to provide an edible pet chew formed from an edible chewy sheet replacing the use of rawhide, which is processed in a friendly pattern to the environment, so that no pollution is produced during processing.

Another object of the present invention is to provide an edible pet chew form from an edible chewy sheet replacing the use of rawhide, which is safe for the pets without harmful residues for example heavy metal residues in finished products, so that the pets' health will not be harmed by ingesting the edible pet chew.

Another object of the present invention is to provide an edible pet chew, which can present various forms and shapes to enhance fun for pets/dogs, and provide more attractions and choices for the pet owners.

An objective of the present invention is to provide a "meat based" edible pet chew, which has considerable meat content in its formula and which is long-lasting for the pets to chew on for a substantially long time before ingesting it.

An objective of the present invention is to provide a "meat based" edible pet chew, which has considerable meat content in its formula which provides inherent strongly-attractive taste, scent and smell to dogs, and thus continuously encourages them to chew on.

An objective of the present invention is to provide a "meat based" edible pet chew, which has considerable meat content in its formula and thus fits digestive system of the pets, so that the pets can obtain sufficient nutrition from the edible pet chew

In one aspect of the edible pet chew of the present invention, a long-lasting chewy sheet is formed from "meat based" material composition, simulating the property and function of existing rawhide/porkhide and substituting rawhide/porkhide. And then the "meat based" sheet further forms a pet chew with various shapes and structures.

In another aspect of the edible pet chew, another "edible chewable material" is wrapped, rolled about or positioned within by said long-lasting chewy sheet formed from "meat based" material composition. With the additional "edible chewable material" wrapped therein, enhanced attraction/appeal and nutrition to dogs is created.

### Brief Description of the Drawings

Reference now is made to the accompanying drawings in which:
FIG. 1 is a top plan view of a primary large chewy sheet formed from meat based material preparing to be cut to smaller sheets to form edible pet chews of the present invention.
FIG. 2 is a top plan view of a smaller chewy sheet cut from the large chewy sheet of FIG. 1. The smaller chewy sheet to be folded is a further preparation to form edible pet chews of the present invention.
FIG. 3 is an elevational view of an embodiment of a pet chew formed from the folded chewy sheet of FIG. 2 to have two knotted ends looking like the two epiphyses of a real bone with a diaphysis in the middle.
FIG. 4 is an elevational view of another embodiment of a pet chew formed from a properly-sized chewy sheet cut from the large chewy sheet of FIG. 1.
FIG. 5 is an elevational view of another embodiment of a pet chew formed from a properly-sized chewy sheet cut from the large chewy sheet of FIG. 1 resembling a bow tie.
FIG. 6 is an elevational view of another embodiment of a pet chew assembled with a few pieces of properly-sized chewy sheets cut from the large chewy sheet of FIG. 1 resembling a ball shape.
FIG. 7 is an elevational view of another embodiment of a pet chew assembled with three pieces of properly-sized particularly-shaped chewy sheets cut from the large chewy sheet of FIG. 1 resembling a boot.
FIG. 8 is an elevational view of another embodiment of a pet chew formed from a properly-sized chewy sheet cut from the large chewy sheet of FIG. 1. The chewy sheet is rolled and pressed.
FIG. 9 is an elevational view of another embodiment of a pet chew formed from a properly-sized chewy sheet cut from the large chewy sheet of FIG. 1 resembling a bone shape. The chewy sheet is rolled and pressed.
FIG. 10 is a cross-sectional view of the embodiment of FIG. 9
FIG. 11 is a top plan view of three individual pieces of jerky and a smaller chewy sheet of FIG. 2. The folded smaller chewy sheet wrapping said jerky in is a further preparation to form edible pet chews of the present invention.
FIG. 12 is an elevational view of an embodiment of a pet chew formed from the folded chewy sheet with jerky of FIG. 11 to have two knotted ends to look like the two epiphyses of a real bone with a diaphysis in the middle.
FIG. 13 is a top plan view of a single piece of jerky and a smaller chewy sheet of FIG. 2. The folded smaller chewy sheet wrapping the jerky in is a further preparation to form edible pet chews of the present invention.
FIG. 14 is an elevational view of another embodiment of a pet chew formed from the folded chewy sheet with jerky of FIG. 13 to have two knotted ends to look like the two epiphyses of a real bone with a diaphysis in the middle.
FIG. 15 is an elevational view of another embodiment of a pet chew formed from a properly-sized chewy sheet cut from the large chewy sheet of FIG. 1, wrapping in a stick-shaped flavored "edible chewable material" appealing to pets.
FIG. 16 is an elevational view of another embodiment of a pet chew formed from a properly-sized chewy sheet cut from the large chewy sheet of FIG. 1, wrapping in three individual pieces of jerky.
FIG. 17 is an elevational view of another embodiment of a pet chew formed from a properly-sized chewy sheet cut from the large chewy sheet of FIG. 1, resembling a bow tie, wrapping in two individual pieces of dried sweet potato chips.
FIG. 18 is an elevational view of another embodiment of a pet chew assembled with a few pieces of properly-sized chewy sheets cut from the large chewy sheet of FIG. 1 resembling a ball shape, wrapping in four individual pieces of sheets of flavored edible chewy material appealing to pets.
FIG. 19 is an elevational view of another embodiment of a pet chew formed from a properly-sized chewy sheet cut from the large chewy sheet of FIG. 1. The chewy sheet is rolled and pressed, wrapping in three individual pieces of jerky
FIG. 20 is an elevational view of another embodiment of a pet chew formed from a properly-sized chewy sheet cut from the large chewy sheet of FIG. 1 resembling a bone shape. The chewy sheet is rolled and pressed, wrapping in two individual pieces of meat jerky or chicken jerky.
FIG. 21 is a cross-sectional view of the embodiment of FIG. 20
FIG. 22 is an elevational view of another embodiment of a pet chew formed from a properly-sized chewy sheet cut from the large chewy sheet of FIG. 1. The chewy sheet is twisted, wrapping in a stick-shaped "edible chewable material" of chicken liver and potato starch composition appealing to pets.

### Detailed Description of the Preferred Embodiment

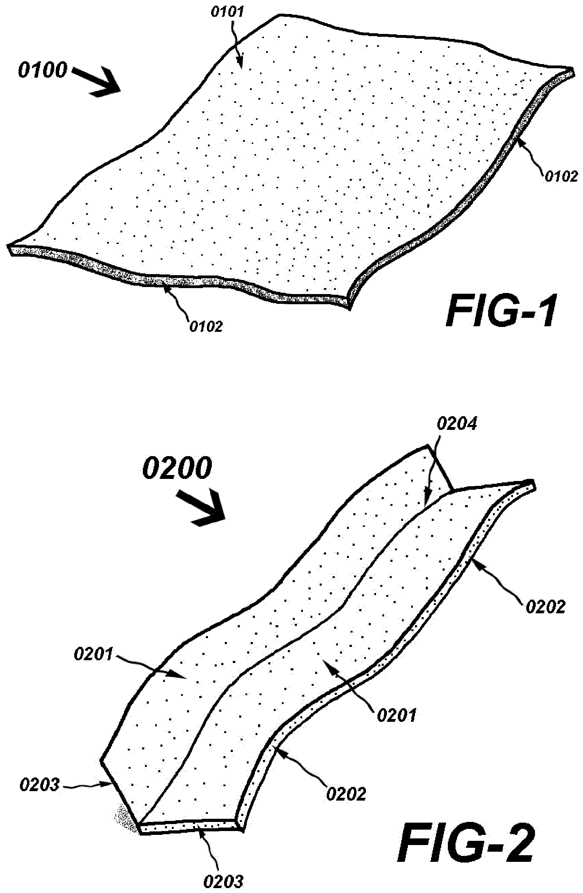

The embodiments of present invention shown in FIG.1 through FIG. 10 are substantially formed by chewy sheets consisting of "meat based" material, wherein the chewy sheet is formed to imitate the chewy property and chewing function of a known rawhide sheet, which is used to form a pet chew, resulting that the chewy sheets consisting of "meat based" material replaces the use of existing known material of rawhide sheet wherein rawhide is used to form a pet chew. The term of "chewy" in this invention is defined as a material that is long-lasting for chewing or can be chewed by a pet for a long time before being ingested by the pet. Since pets, primarily dogs, are extremely more appealed/attracted by meat than rawhide, pet chews made of meat based material sheet have an obvious advantage in palatability versus the ones made of rawhide. Furthermore, the sheets with "meat based" material are particularly processed making it long-lasting for pets to chew on. In the last heating process, the "meat based" material pet chew is hardened to a proper rigidity and strength so as to provide the pet chew with an enough tensile strength for being chewed by pet for a long time to satisfy the pets, primarily dogs' inherent urge of chewing.

Alternatively, the meat based material to form the chewy sheet includes an additive and the additive is a filler.

Preferably, to form a chewy sheet, said meat based material comprises meat ingredient, additive and filler. Said meat ingredient is formed by grinding raw meat when it is still wet. The additive and filler ingredients are used to make the "meat based material" composition in sufficient strength and flexibility for manipulating such as such as forming, molding, rolling, folding, flexing, knotting, pressing and etc and make dried finished products formed from said chewy sheet in a proper rigidity and strength providing long-lasting chewing property for dogs. Preferably, the additive is selected from the group consisting of a thickener, a humectant, a stabilizer, an emulsifier, a gelatinizer, filler and a binder, so as to provide the meat based material sufficient strength and flexibility for manipulating as desired to form a pet chew, and so as to provide the meat based material sufficient rigidity and tensile strength after a drying process with the purpose of making the chewy sheet be chewy for pets to chew on.

Said thickener is selected from the group consisting of:glucose syrup, malt syrup, soy protein Isolate, wheat protein isolate, corn protein isolate, artemisia gum, linseed gum, deacetylated chitin, pectins, sodium alginate, xanthan gum, carrageenan; phosphated distarch phosphate, sodium lactate, diacetyl tartaric acid ester of mono(di)glycerides(DATAE), sesbania gum, polyglycerol esters of fatty acid (polyglycerol monostearate, polyglycerol monooleate), maltitol, sorbitol, propylene glycol, ablmoschus manihot gum, β -cyclodextrin, arabic gum, starch acetate, guar gum, potassium alginate, carob bean gum, gellan gum, sodium polyacrylate, distarch phosphate, gelatin, hydroxypropyl, distarch phosphate, hydroxypropyl methyl cellulose, agar, acid treated starch, sodium carboxy methyl cellulose, oxidized starch and oxidized hydroxypropyl starch; Said humectant is selected from the group consisting of: soy protein Isolate, wheat protein isolate, corn protein isolate, glucose syrup, malt syrup, sodium pyrophosphate, trisodium orthophosphate, sodium hexametaphosphate, sodium tripolyphosphate, phosphoric acid, calcium dihydrogen phosphate, sodium lactate, maltitol, sorbitol, propylene glycol, glycerin, sodium dihydrogen phosphate, sodium phosphate dibasic, potassium lactate, sodium lactate, acetylated distarch phosphate and acetylated distarch adipate; Said stabilizer is selected from the group consisting of: trisodium orthophosphate, potassium sorbate, sodium stearoyl lactylate, calcium stearoyl lactylate, phosphoric acid, hydroxypropyl starch, pectins, xanthan gum, carrageenan, sodium lactate, polyglycerol esters of fatty acid (polyglycerol monostearate, polyglycerol monooleate), maltitol, sorbitol, propylene glycol, propylene glycol esters of fatty acid and glucono delta-lactone; Said emulsifier is selected from the group consisting of: soy protein Isolate, wheat protein isolate, corn protein isolate, Sucrose esters of fatty acid, sodium hexametaphosphate, sodium stearoyl lactylate, calcium stearoyl lactylate, hydroxypropyl starch, pectins, carrageenan, diacetyl tartaric acid ester of mono(di)glycerides (DATAE), polyglycerol esters of fatty acid (polyglycerol monostearate, polyglycerol monooleate), maltitol, sorbitan monolaurate, sorbitol, propylene glycol, propylene glycol esters of fatty acid, polyoxyethylene xylitan monostearate, tripolyglyceryl monostearate, potassium stearate, mono-(di-,tri-)glyce rides of fatty acids, modified soybean phospholipid, sodium caseinate, citric and fatty acid esters of glycerol, lactic and fatty acid esters of glycerol, sodium starch octenyl succinate and acetylated mono and diglyceride (acetic and fatty acid esters of glycerol); Said gelatinizer is selected from the group consisting of: soy protein Isolate, wheat protein isolate, corn protein isolate, propylene glycol, glucono delta-lactone; Said binder is selected from the group consisting of:glutinous rice flour, gelatin, linseed gum, pectins, xanthan gum, carrageenan, sesbania gum, maltitol, sodium alginate, ablmoschus manihot gum, arabic gum, guar gum, Carob bean gum, gellan gum and agar. Said filler is selected from the group consisting of: a plant material, a plant derived material, a plant protein and a plant starch.

Now refer to FIG. 1. An embodiment of chewy Sheet 0100 formed from a molded, rolled or extruded "meat based material" composition. The composition for example comprises chicken, mixed with additives and fillers such as glutinous rice flour, gelatin, Soy Protein Isolate, Glucose Syrup, glycerin, Sodium Pyrophosphate and preservative(s). It should be noted that the term "meat based" material as used in present invention is defined as the material whose formula comprises at least 1/3 (one third) "meat ingredient" in proportion by weight. The term of "Meat" in present invention is defined as the ingredient derived from the ones selected from the group consisting of: animal meat, such as chicken, pork, beef, duck meat, goose, turkey meat, poultry meat, fish, raw meat; and consisting of animal pizzle, viscera, animal liver, lung, heart and animal fat. Furthermore with the definition of the term "meat based" material, in order to ensure inherent appealing taste and scent for pets (primarily dogs) to chew, the "meat ingredients" in this term need account for the largest/primary proportion in the formula by weight versus any other individual non-meat materials; and furthermore with the definition of the term "meat based material", "plant ingredient" (for example corn, potato, wheat, rice, gluten, etc) if applicable, need account to less than 1/2 (one twice) in the formula by weight of "meat based" material, so as to ensure the pet chew of present invention maintain their inherent appealing to dogs since dogs prefer "meat" ingredients than all others.

Except "meat ingredients", the total weight of all other "non-meat" ingredients of "meat based" material, for example glutinous rice flour, gelatin, Soy Protein Isolate, Glucose Syrup, glycerin and Sodium Pyrophosphate in this case may be in a small percentage, for example 15% by weight, to provide a proper rigidity, chewability, malleability, moldability, extrudability, and formability. Other additives and fillers for the "meat based material" composition may be substituted for the above mentioned additives and fillers as long as the additives and fillers can have the "meat based material" in a proper strength and flexibility for manipulating such as forming, molding, rolling, folding, flexing, knotting, pressing and etc in an initially malleable manner and can have the "meat based material" be eventually hardened by heat or drying into a properly hard but long-lasting chewing manner. The Chewy sheet 0100 may be formed by, for example, molding, extrusion, pressing, rolling or injection molding, etc. Since Chewy sheet 0100 has a high content of meat ingredient in its formula, pet chews made of it can well attract pets/dogs to chew on them for a long time.

Preferred proportion of said "meat ingredients" in the formula of "meat based material" is 50% to 95% by weight. And said "meat ingredients" in this invention is formed from raw meat whose original inner structure is modified wherein modifying said raw meat is embodied as for example grinding the raw meat slaughtered from animal in order to change the original structure/form of the raw meat. As an example of processing of said modifying inner structure, raw meat is cut from an animal; then grind the raw meat when it is wet to destroy the original inner structure of it. The raw meat is ground to a slurry status and thus "raw meat modified with its original inner structure" is prepared for following processing steps to make a pet chew. As another example of the processing of said modifying inner structure, raw meat is cut from an animal; then raw meat is dried and then ground to small particles or powder status.

The "non-meat" ingredients mentioned above such as glutinous rice flour, soy protein isolate, gelatin, glycerin and Sodium Pyrophosphate are jointly serving as humectants an/or thickeners and/or stabilizer and/or gelatinizer and/or binder and/or fillers, as additives or fillers. The additive and filler ingredients are used to make the meat based material composition in sufficient strength and flexibility for manipulating such as forming, molding, rolling, folding, flexing, knotting, pressing and etc and make dried finished products in a proper rigidity and strength providing long-lasting chewing property for dogs.

It should be noted that the chewy sheet forming the edible pet chew of present invention is without use of rawhide, and the chewy sheet forming the edible pet chew of present invention is without use of porkhide.

As an alternative formula of an embodiment, the chewy sheet 0100 consists of chicken breast, glutinous rice flour, gelatin , Soy Protein Isolate, Glucose Syrup, Salt, Sugar, and preservative(s). Ingredient percentages of every ingredient are as follows: chicken breast (80.9%), glutinous rice flour (8%), gelatin (4%), Soy Protein Isolate (3%), Glucose Syrup (2%), Salt (1%), Sugar (1%), and preservative(s) (0.1%). In this formula, chicken breast is the sole meat ingredient accounting to larger than 1/3 of the whole formula, 80.9% actually. Total weight of "plant" ingredients in this case is lower than 1/2 in the formula, actually 11% (glutinous rice flour + soy protein isolate).

As another alternative formula of an embodiment, the chewy sheet 0100 consists of ground dried chicken powder, modified plant starch and water. Ingredient percentages of every ingredient are as follows: ground dried chicken powder (52%), modified plant starch (48%). In this formula, ground dried chicken is the sole meat ingredient accounting to larger than 1/3 of the whole formula, 52% actually. Total weight of "plant" ingredients in this case is lower than 1/2 in the formula, actually 48% (modified plant starch). Ingredient of modified plant starch in the formula is an additive for the meat based material to form chewy sheet 0100 and modified plant starch serves as filler/binder for the meat based material to form chewy sheet 0100.

As another alternative formula of an embodiment, the chewy sheet 0100 consists of chicken breast, glutinous rice flour, glycerin, pork, carrageenan, Corn, Sorbitol, chicken liver, Cattle Pizzle, Salt, Sugar, xanthan gum, Sodium Pyrophosphate, and preservative(s). Ingredient percentages of every ingredient are as follows: chicken breast (20%), glutinous rice flour (20%), glycerin (10%), pork (10%), carrageenan (10%), Corn (8%), Sorbitol (6.6%), chicken liver (4%), Cattle Pizzle (1%), Salt (2%), Sugar (3%), xanthan gum (5%), Sodium Pyrophosphate (0.3%), and preservative(s) (0.1%). In this formula, chicken breast, pork, chicken liver and cattle pizzle are the "meat" ingredients. Total weight of all the "meat" ingredients accounts to larger than 1/3 of the whole formula, 35% actually. Total weight of "plant" ingredients in this case is lower than 1/2 in the formula, actually 28% (glutinous rice flour + corn).

In some alternative embodiments of present invention, the meat based material forming the chewy sheet comprises at least 35% meat ingredient in the formula of the meat based material by weight.

It is recognized that the length, width, and thickness of the Chewy Sheet 0100 may vary as desired to obtain pet chews of different sizes, shapes, configurations. The size or area of the Chewy Sheet 0100 of FIG. 1 may be various according to predetermined request. The Sheet 0100 is divided/cut into small pieces in shape of rectangle or other specific shapes for further forming the desired products. The thickness of the sheet 0100 may be various as well according to predetermined request, resembling actual known rawhide or porkhide. A preferred specification of a chewy sheet of 0100 in finished end products as a typical embodiment of present invention includes: 0.5mm to 5mm in thickness, more typically 1mm-2.5mm, tensile strength at least 0.5mPa, more typically 0.5mPa to 5mPa, and moisture 8%-16%.

A preferred manufacturing process for a typical embodiment of present inve ntion to make an end product includes the following steps:
the first step, preparing animal meat, for example frozen chicken breast, defrosting the meat, drying the meat and then modifying the inner structure of the meat by grinding it;
the second step, forming a "meat based" material composition by mixing the ground d ried "meat" from the first step, additive/filler and water together;
the third step, getting said composition into an extruding machine to form a rectangula r sheet of "meat based" composition in primarily larger size, then heating the composi tion in the extruding machine at a high temperature, typically 90°C to 115°C, during t he extruding process, wherein the thickness of said "sheet" ranges from 0.5mm to 5m m;
the fourth step, cutting the sheet of the third step to a number of smaller sheets with pr e-determined smaller size(s);
the fifth step, forming the smaller sized sheets to products of dog chew;
the sixth step, drying the products by heating at around 45-65°C, typically at 55°C, for sufficient time and obtaining a final finished dog chew pr oduct.
The Tensile Strength of sheet components in final finished products is at least 0.5mPa, typically 0.5mPa to 5mPa. Moisture of the sheet components in final finished product s is 8-16%. The aim of this heating step is to further harden the products in a manner that m akes the end product long-lasting for chewing but still be chewable.

0101 in FIG.1 represents the surface of chewy sheet 0100. 0102 in FIG.1 represents the both longitudinal and latitudinal sides of chewy sheet 0100.

As shown in FIG. 2. A smaller Chewy sheet 0200 is created by cutting Sheet 0100 into small pieces. Fold Sheet 0200 approximately at the half line 0204. In FIG. 2, 0201 represents the surface of the small sheet 0200 cut from 0100. 0202 and 0203 are respectively longitudinal and latitudinal sides of the small sheet 0200.

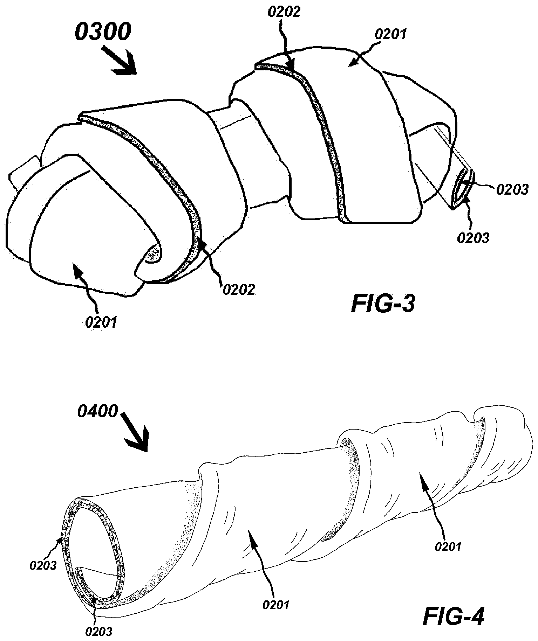

As shown in FIG. 3, an embodiment of present invention. An alternate shaped Pet Chew 0300 is formed simulating a bone. With said additive or filler as mentioned above, it enables folded sheet 0200 to be shaped to pet chew 0300 as desired by further manipulating. Processes are, get the folded Sheet 0200 of FIG. 2 ready. Tie the two longitudinal ends of the folded sheet 0200 to make a simulation of two epiphyses of a real bone with a diaphysis in the middle. Finished products of pet chew 0300 formed from "meat based material" sheet 0100 has a high content of meat which attracts pet/dogs to chew on with its inherent smell and taste. With said additive or filler as mentioned above, it enables pet chew 0300 to be hardened to a long-lasting for chewing manner which makes dogs chew for a long time before they completely digest it. The chewing activity can well exercise the dog's jaw, grind their teeth and remove tartar from their teeth.

As shown in FIG. 4, an embodiment of present invention. An alternate shaped Pet Chew 0400 is formed looking like a twisted stick. Processes are, get the folded Sheet 0200 of FIG. 2 ready. Shape it by hand by twisting the sheet.

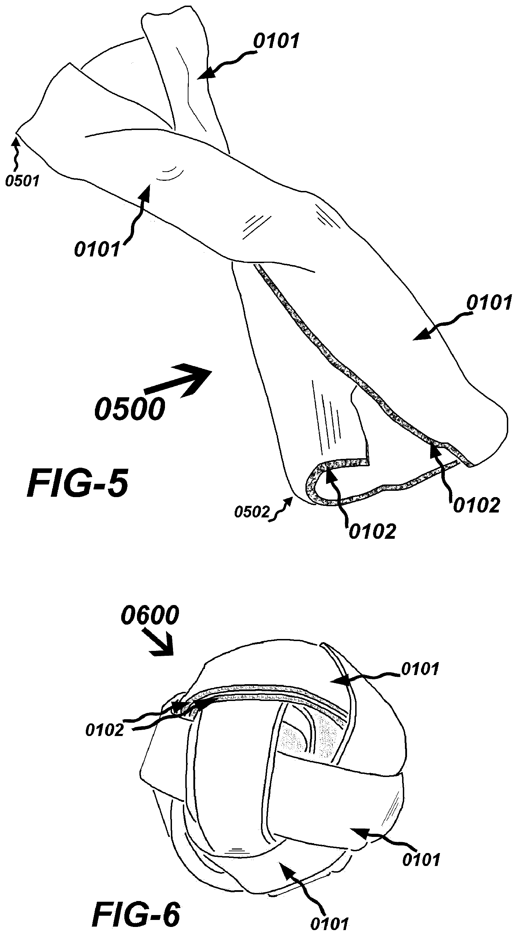

As shown in FIG. 5, an embodiment of present invention. An alternate shaped Pet Chew 0500 is formed looking like a bow tie. Processes are, cut a small properly-sized rectangular sheet from Sheet 0100 of FIG. 1. Fold the small sheet longitudinally at the position of 0501 and 0502. Twist the folded sheet having it look like a bow tie.

As shown in FIG. 6, an embodiment of present invention. An alternate shaped Pet Chew 0600 is formed looking like a ball shape. Processes are, cut a number of small properly-sized rectangular sheets from Sheet 0100 of FIG. 1. Assemble the sheets to have it structured to a ball shell with hollow inside.

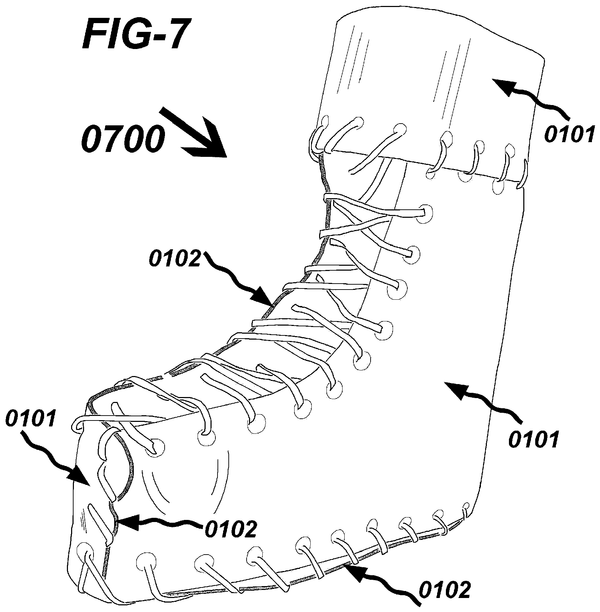

As shown in FIG. 7, an embodiment of present invention. An alternate shaped Pet Chew 0700 is formed looking like a boot. Processes are, cut three small properly-sized particularly-shaped sheets from Sheet 0100 of FIG. 1 with a cutting machine. Assembly the three sheets with edible strings to form a boot shape.

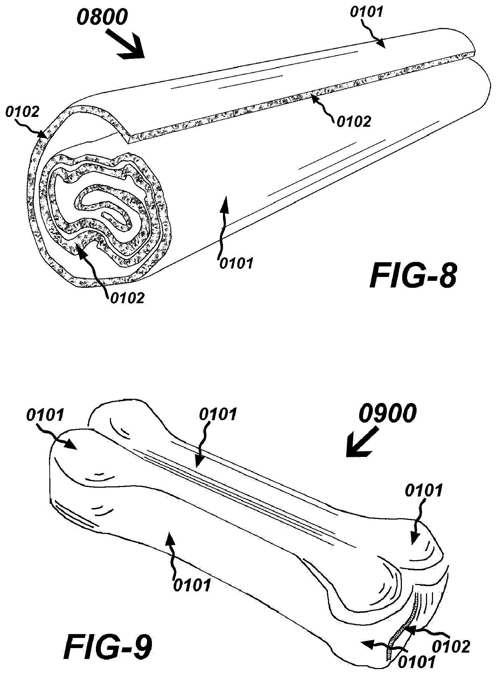

As shown in FIG. 8, an embodiment of present invention. An alternate shaped Pet Chew 0800 is formed looking like a stick. Processes are, cut a small properly-sized rectangular sheet from Sheet 0100 of FIG. 1. Roll the sheet to make a cylindrical stick. Put the rolled stick into a CYLINDER-shaped-cavity pressing mold and then press it. The aim of pressing is to make the product in a permanent structure and longer-lasting chewing for pets.

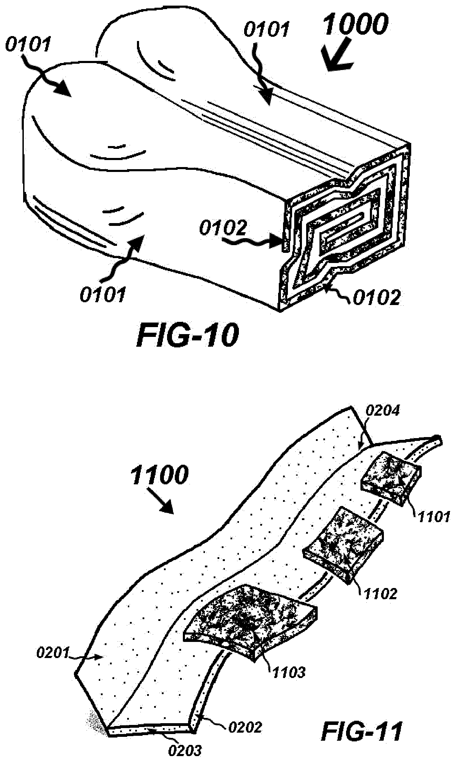

As shown in FIG. 9 and 10, an embodiment of present invention. An alternate shaped Pet Chew 0900 is formed looking like a bone shape. Processes are, cut a small properly-sized rectangular sheet from Sheet 0100 of FIG. 1. Roll the sheet to make a cylindrical stick. Put the rolled stick into a BONE-shaped-cavity pressing mold and then press it making the product in a shape of bone. The cross-sectional view of the product is as shown in 1000 of FIG. 10.

Here comes another aspect of present invention as shown in FIG. 11 through FIG. 21 developing from within the scope and spirit of present invention. Due to the fact that the "meat based" sheet has meat ingredient quite lower than 100% in the formula for example only 50%, compared to pet chews made of almost 100% meat for example chicken jerky, it may reduce the palatability/attraction, to a small extent, for the pet chews made of "meat based" materials. In order to further improve this and make the products in present invention even more appealing, appetizing and more nutritious for pets/dogs, another "edible chewable material" is wrapped , rolled about or positioned within by "meat based" Chewy Sheet 1100 to enhance the appealing and nutrition of the pet chew for dogs. In this aspect, the "meat based" material chewy sheets serves as outer layer of the pet chew. Said another "edible chewable material" wrapped therein is preferred to be for example meat jerky or chicken jerky, which provides more appealing and appetizing urge for pets/dogs to chew. Said another chewable material wrapped inside the outer layer can be totally covered by the outer layer without exposure or partially exposed. The presence of another chewable material can highly encourage pets/dogs to chew and then eat starting with the outer meat based material before their reaching the inner "another chewable material". It's evident that the jerky wrapped therein has nearly 100% meat/chicken in its formula which is more appealing and appetizing for dogs than said meat based materials. Dogs will be more attracted by the chicken jerky wrapped therein to chew on the pet chew but they can't reach the jerky unless they ingest the "meat based material" outer layer. In this pattern, the pet chew of this aspect has consistent attraction to dogs during their chewing it.

It should be noted that the term "jerky" as used in present invention is defined as including "traditional jerky" and "kippered jerky". "Traditional jerky" as defined herein typically consists of chicken, pork, beef, turkey, fish, or another animal meat which is cut into strips. The sliced meat may be flavored using a flavoring and/or a marinade and be dried via a drying equipment, a smoker or another manner. "Kippered jerky" as defined herein comprises ground pieces of meat, chicken, turkey, fish, etc., and a filler. The composition is then be shaped in a manner and then dried to be a jerky.

Alternatively, said another "edible chewable material" wrapped therein may be flavored edible materials, which is appealing for pets/dogs. Preferably, said "edible chewable material" is selected from a group consisting of: dried or cured animal meat, such as chicken, pork, beef, duck meat, goose, turkey meat, poultry meat, fish; animal pizzle; animal viscera, such as liver, lung, and heart; animal fat; dried fruit, dried vegetable, dried carrot, dried sweet potato, biscuit; and meat jerky and chicken jerky.

As shown in FIG. 11. Under the said second aspect of present invention (a member of edible material wrapped in said chewy sheet), three pieces of dried meat jerky or chicken jerky, 1101, 1102 and 1103 are positioned on the Chewy Sheet 0200. Positions of said 1101, 1102 and 1103 are as shown in FIG. 11. Fold Chewy Sheet 0200 approximately at the half line 0204.

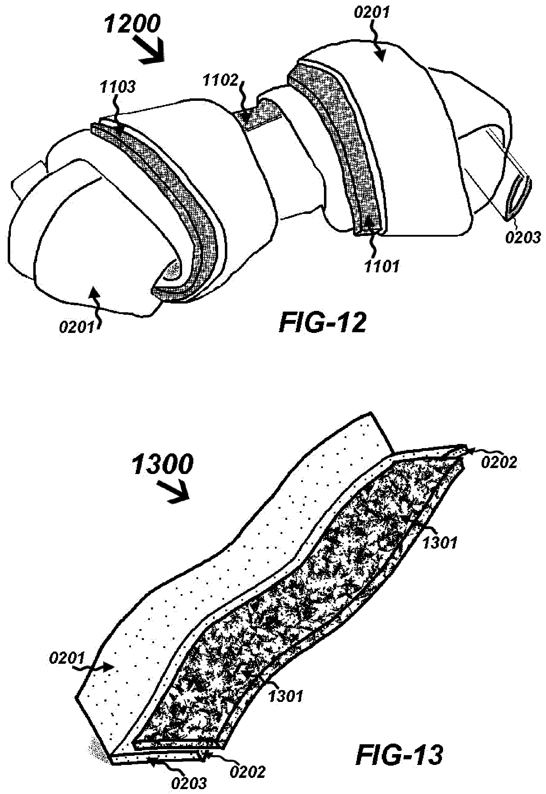

As shown in FIG. 12, an embodiment of present invention. An alternate shaped Pet Chew 1200 is formed with said dried meat jerky or chicken jerky 1101, 1102 and 1103 simulating a bone. Processes are, get the folded Chewy sheet 1100 ready. Tie the two longitudinal ends of the folded sheet 1100 to make a simulation of two epiphyses of a real bone with a diaphysis in the middle. A small part of every Jerky 1101, 1102 and 1103 is preferred to expose on the outer layer of the pet chew 1200 which enable an easier appealing for dogs to chew. But alternatively, Jerky 1101, 1102 and 1103 may be covered thoroughly without any exposure by the outer layer of the pet chew. Since this pet chew has dried meat jerky inside, the smell and taste of dried meat jerky provides additional extreme urge for pets/dogs to chew on it for extended periods of time.

As shown in FIG. 13. Similar to 1100 but instead of three pieces of jerky, only a larger single piece of dried meat jerky or chicken jerky 1301 is positioned on the Sheet 0200. Position of said 1301 is as shown in FIG. 13. Fold Sheet 0200 approximately at the half line 0204.

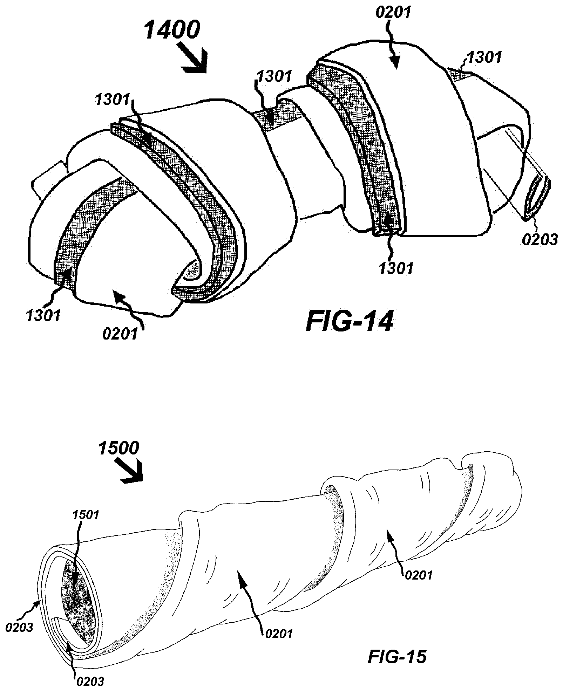

As shown in FIG. 14, an embodiment of present invention. An alternate shaped Pet Chew 1400 is formed with said dried meat jerky or chicken jerky 1301 simulating a bone. Processes are, get the folded Chewy sheet 1300 ready. Tie the two longitudinal ends of the folded sheet 1300 to make a simulation of two epiphyses of a real bone with a diaphysis in the middle. A small part of Jerky 1301 is preferred to expose on the outer layer of the pet chew 1400 which enable an easier appealing for dogs to chew. But alternatively, Jerky 1301 may be covered thoroughly without any exposure by the outer layer of the pet chew.

As shown in FIG. 15, an embodiment of present invention. An alternate shaped Pet Chew 1500 is formed looking like a twisted stick. Processes are, get the folded Sheet 0200 of FIG. 2 ready. Get a flavored edible material 1501 ready which is in a shape a cylindrical stick. Roll folded sheet 0200 longitudinally along the stick 1501 and wrap it in the sheet 0200. Form a twist stick with "meat based" material as outer layer and flavored edible material as the inner.

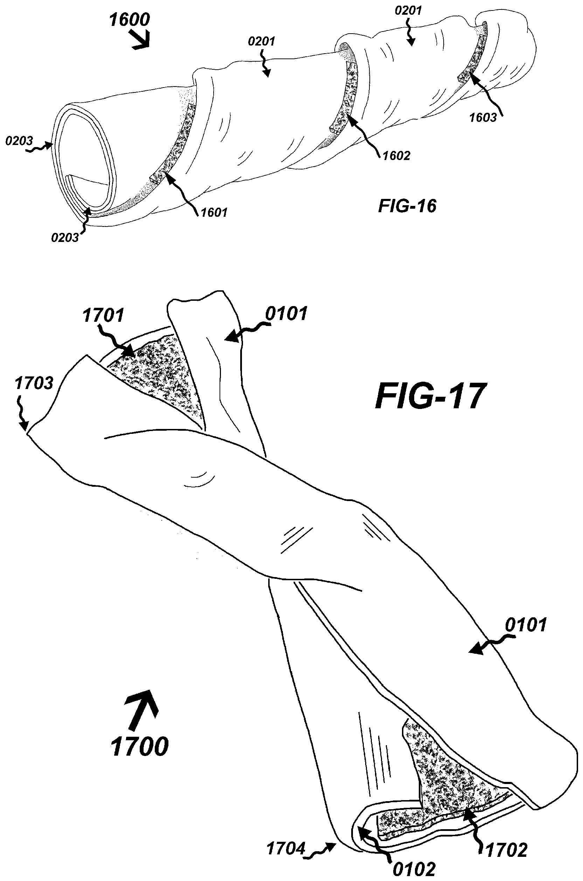

As shown in FIG. 16, an embodiment of present invention. An alternate shaped Pet Chew 1600 is formed looking like a twisted stick. Processes are, get the folded Chewy sheet 0200 ready. Get three pieces of meat jerky or chicken jerky, 1601, 1602 and 1603 ready. Twist the folded Sheet 0200 to shape it into a stick with hollow inner and when twisting it, wrap said three pieces of jerky 1601, 1602 and 1603 in the positions as shown in FIG. 16. A small part of every three jerky may be exposed as shown in FIG. 16 or not be exposed.

As shown in FIG. 17, an embodiment of present invention. An alternate shaped Pet Chew 1700 is formed looking like a bow tie. Processes are, cut a small properly-sized rectangular sheet from Sheet 0100 of FIG. 1 and fold it longitudinally at the position of 1703 and 1704. Get two pieces of dried sweet potato chips, 1701 and 1702 ready. Put the two pieces of dried sweet potato on the two longitudinal ends of the small sheet respectively. Twist the folded Sheet with dried sweet potato having it look like a bow tie.

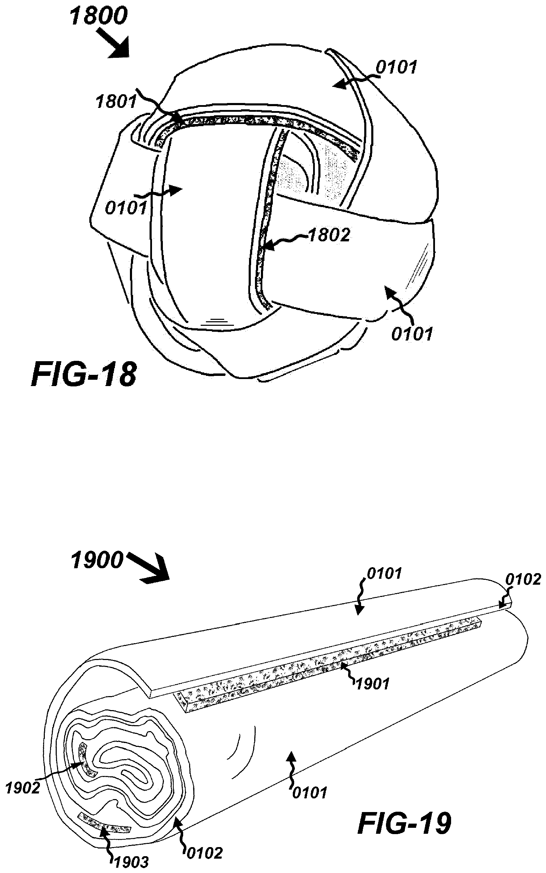

As shown in FIG. 18, an embodiment of present invention. An alternate shaped Pet Chew 1800 is formed looking like a ball shape. Processes are, cut several small properly-sized rectangular sheets from Sheet 0100 of FIG. 1. Get four pieces of flavored edible chewy sheets ready (sheet 1801 and 1802 in this figure are two of said four edible chewy sheets). The four pieces of flavored edible chewy sheets here serves as "another edible chewable material" under this aspect of present invention. Assemble the small "meat based" sheets from 0100 and the four pieces of flavored edible chewy sheets together to have it structured to a ball shell with hollow inside. Position of 1801 and 1802 is as shown in FIG. 18.

As shown in FIG. 19, an embodiment of present invention. An alternate shaped Pet Chew 1900 is formed looking like a stick. Processes are, cut a small properly-sized rectangular sheet from Sheet 0100 of FIG. 1. Get three pieces of meat jerky or chicken jerky in proper size 1901, 1902 and 1903 ready. Put said jerky on the small sheet cut from sheet 0100. Roll the sheet together with the jerky to make a cylindrical stick. Put the rolled stick into a CYLINDER-shaped-cavity pressing mold and then press it. The aim of pressing is to make the product in a permanent structure and longer-lasting chewing for pets. A small part of every three jerky may be exposed as shown in FIG. 19 or not be exposed.

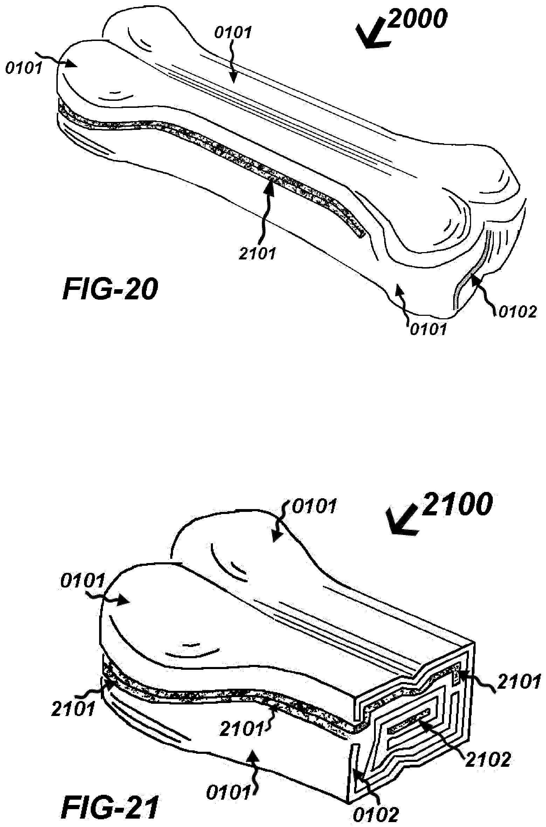

As shown in FIG. 20 and 21, an embodiment of present invention. An alternate shaped Pet Chew 2000 is formed resembling a bone shape. Processes are, cut a small properly-sized rectangular sheet from Sheet 0100 of FIG. 1. Get two pieces of meat jerky or chicken jerky in proper size 2101 and 2102 as shown in FIG. 20 and 21 ready. Put said jerky on the small sheet cut from sheet 0100. Roll the small sheet together with the jerky to make a cylindrical stick wrapping 2101 and 2102 in. Put the rolled stick into a BONE-shaped-cavity pressing mold and then press it making the product in a shape of bone. The aim of pressing is to make the product in a permanent structure and longer-lasting chewing for pets. The cross-sectional view of the product is as shown in 2100 of FIG. 21 where the two pieces of jerky are located. A small part of both two jerky may be exposed as shown in FIG. 20 or not be exposed.

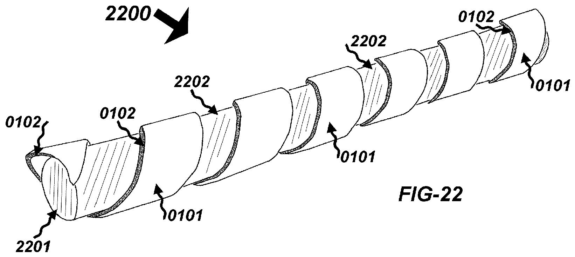

As shown in FIG. 22, an embodiment of present invention. An alternate shaped Pet Chew 2200 is formed looking like a stick. Processes are, cut a small properly-sized rectangular sheet from "meat based" Sheet 0100 of FIG. 1. Get a dried extruded edible stick 2202 made of a composition comprising chicken liver and potato starch ready. Wrap the stick 2202 longitudinally with the "meat based" small sheet by twisting the small sheet. 2201 in this figure is an end of stick 2202.

It is foreseen that within said aspect of present invention, a pet chew in a pattern may have more than one layer (for example more than one layer of 0100 or 0200) in the outer sheet. And Sheet 0100 and 0200 may have several layers in the sheet itself. It is also foreseen that the small sheet cut from initial sheet 0100 used to the final products may have various shapes.

In present invention, a meat based material is used to create a chewy sheet to form pet chews that existing known rawhide/porkhide can make. The spirit of present invention is that, the meat based material chewy sheet simulates the property and function of existing rawhide or plant based material to form a pet chew. By doing this, rawhide/porkhide is substituted perfectly by the chewy sheet under present invention when making pet chew products. Compared to rawhide/porkhide, one advantage of meat based material sheet is that, it is obviously extremely more attractive and appetizing for dogs, which urges them to chew. Another advantage is that, the raw material of meat based material does not have the potentially health-harmful residue that rawhide in the finished products has. And a third advantage is, producing the raw material of meat based material is environment-friendly and will not pollute the environment and water system, but producing the raw material of rawhide is known to generate evident pollution risk during its splitting, cleaning, washing and bleaching processes. A forth advantage is, meat based material has more inherent nutrition than rawhide/porkhide or plant based materials as well.

One skilled in the art will understand that the embodiment of the present invention as shown in the drawings and described above is exemplary only and not intended to be limiting.

Although the preferable embodiments according to the disclosure have been disclosed for the purpose of example, those skilled in the art should realize that various improvements, increments and replacements can be possible. Therefore, the scope of the disclosure should not be limited to the embodiments above.

## Claims

1. An edible pet chew, comprising:
a chewy sheet of meat based material, wherein said meat based material comprises at least 1/3 meat ingredient in the formula of said meat based material by weight, less than 1/2 plant ingredient in the formula of said meat based material by weight and an additive, wherein said chewy sheet is without use of rawhide, where said chewy sheet is without use of porkhide;
wherein said plant ingredient in said meat based material is less than 1/2 in the formula by weight, so as to ensure inherent appeal, attraction and chewing interest of said edible pet chew for pets to chew on.

2. The edible pet chew, as recited in claim 1, wherein:
said additive is selected from the group consisting of a thickener, a humectant, a stabilizer, an emulsifier, a gelatinizer and a binder, so as to provide said meat based material sufficient strength and flexibility;
said meat ingredient is selected from the group consisting of: raw meat, animal meat, chicken, pork, beef, duck meat, goose, turkey meat, poultry meat, fish, animal pizzle, animal viscera, animal liver, animal lung, animal heart and animal fat.

3. The edible pet chew, as recited in anyone of claims 1-2, wherein:
said additive comprises a filler;
said filler is selected from the group consisting of: a plant material, a plant derived material, a plant protein and a plant starch.

4. The edible pet chew, as recited in anyone of claims 1-3, wherein:
said meat ingredient in formula of said meat based material is 50% to 95%.

5. The edible pet chew, as recited in anyone of claims 1-4, wherein:
said chewy sheet is folded or rolled longitudinally to a folded sheet that is knotted at first and second longitudinal ends; said first and second longitudinal ends having knots therein.

6. The edible pet chew, as recited in anyone of claims 1-5, further comprising a member of an edible chewable material wherein:
said chewy sheet of meat based material forms an outer layer of said edible pet chew;
said edible chewable material is wrapped or positioned in said chewy sheet to further enhance appeal and attraction or nutrition of said edible pet chew for pets; said edible chewable material wrapped in said chewy sheet is totally covered by said chewy sheet without exposure or is partially covered with exposure.

7. The edible pet chew, as recited in anyone of claims 6, wherein:
a member of said chewy sheet is folded or rolled longitudinally with another member of said edible chewable material to a folded sheet that is knotted at first and second longitudinal ends; said first and second longitudinal ends having knots therein.

8. The edible pet chew, as recited in anyone of claim 6-7, wherein:
said edible chewable material is selected from the group consisting of:
dried or cured animal meat, chicken, pork, beef, duck meat, goose, turkey meat, poultry meat, fish, animal pizzle, animal viscera, animal liver, animal lung, animal heart, animal fat, fruit, dried vegetable, carrot, sweet potato, biscuit, meat jerky and chicken jerky.

9. The edible pet chew, as recited in anyone of claim 6-8, wherein:
said edible chewable material is meat jerky or chicken jerky.

10. The edible pet chew, as recited in claim 1, wherein:
said meat based material comprises at least 35% meat ingredient in the formula of
said meat based material by weight.

11. The edible pet chew, as recited in claim 1, wherein:
said additive comprises a filler.

## Patentansprüche

1. Ein essbares Kauzeug für ein Haustier, umfassend:
ein zähes Blatt von auf Fleisch basierendem Material, wobei das auf Fleisch basierende Material bezogen auf das Gewicht wenigstens 1/3 Fleischbestandteil in der Rezeptur des auf Fleisch basierenden Materials, bezogen auf das Gewicht weniger als 1/2 Pflanzenbestandteil in der Rezeptur des auf Fleisch basierenden Materials und ein Additiv umfasst, wobei das zähe Blatt ohne Verwendung von Rohhaut vorliegt, wobei das zähe Blatt ohne Verwendung von Schweinehaut vorliegt;
wobei der Pflanzenbestandteil in dem auf Fleisch basierenden Material bezogen auf das Gewicht weniger als 1/2 in der Rezeptur beträgt, um so inhärente Attraktivität, Anreiz und Kauinteresse für das essbare Kauzeug für Haustiere zum Weiterkauen durch die Haustiere zu gewährleisten.

2. Das essbare Kauzeug für ein Haustier, wie in Anspruch 1 angegeben, wobei:
das genannte Additiv aus der Gruppe ausgewählt ist, die aus einem Verdickungsmittel, einem Feuchthaltemittel, einem Stabilisator, einem Emulgator, einem Geliermittel und einem Bindemittel besteht, um so dem auf Fleisch basierenden Material ausreichende Festigkeit und Flexibilität zu verleihen;
wobei der Fleischbestandteil ausgewählt ist aus der Gruppe bestehend aus: rohes Fleisch, tierisches Fleisch, Hühnerfleisch, Schweinefleisch, Rindfleisch, Entenfleisch, Gänsefleisch, Putenfleisch, Geflügelfleisch, Fisch, tierischer Ochsenziemer, tierische Eingeweide, tierische Leber, tierische Lunge, tierisches Herz und tierisches Fett.

3. Das essbare Kauzeug für ein Haustier, wie in einem der Ansprüche 1 - 2 angegeben, wobei:
das genannte Additiv einen Füllstoff umfasst;
der genannte Füllstoff ausgewählt ist aus der Gruppe bestehend aus: einem pflanzlichen Material, einem aus Pflanzen abgeleiteten Material, einem pflanzlichen Protein und einer pflanzlichen Stärke.

4. Das essbare Kauzeug für ein Haustier, wie in einem der Ansprüche 1 - 3 angegeben, wobei:
der Fleischbestandteil in der Rezeptur des auf Fleisch basierenden Materials 50 % bis 95 % beträgt.

5. Das essbare Kauzeug für ein Haustier, wie in einem der Ansprüche 1 - 4 angegeben, wobei:
das zähe Blatt in Längsrichtung zu einem gefalteten Blatt gefaltet oder gerollt ist, das an den ersten und zweiten Längsenden verknotet ist; wobei die ersten und zweiten Längsenden darin Knoten aufweisen.

6. Das essbare Kauzeug für ein Haustier, wie in einem der Ansprüche 1 - 5 angegeben, wobei:
das zähe Blatt aus auf Fleisch basierendem Material eine äußere Schicht des essbaren Kauzeugs für ein Haustier bildet;
das essbare kaubare Material in dem zähen Blatt eingewickelt oder positioniert ist, um Attraktivität, Anreiz oder Ernährung des essbaren Kauzeugs für ein Haustier für Haustiere weiter zu verbessern;
das essbare kaubare Material, das in dem zähen Blatt eingewickelt ist, von dem zähen Blatt vollständig ohne Freilegung bedeckt oder teilweise mit Freilegung bedeckt ist.

7. Das essbare Kauzeug für ein Haustier, wie in einem der Ansprüche 6 angegeben, wobei:
ein Teil des zähen Blatts in Längsrichtung mit einem anderen Teil des zähen Blatts zu einem gefalteten Blatt gefaltet oder gerollt ist, das an den ersten und zweiten Längsenden verknotet ist; wobei die ersten und zweiten Längsenden darin Knoten aufweisen.

8. Das essbare Kauzeug für ein Haustier, wie in einem der Ansprüche 6 - 7 angegeben, wobei:
das genannte essbare kaubare Material ausgewählt ist aus der Gruppe bestehend aus:
getrocknetes oder haltbar gemachtes tierisches Fleisch, Hühnerfleisch, Schweinefleisch, Rindfleisch, Entenfleisch, Gänsefleisch, Putenfleisch, Geflügelfleisch, Fisch, tierischer Ochsenziemer, tierische Eingeweide, tierische Leber, tierische Lunge, tierisches Herz und tierisches Fett, Frucht, getrocknetes Gemüse, Karotte, Süßkartoffel, Biskuit, Trockenfleisch aus Fleisch und Trockenfleisch aus Hühnerfleisch.

9. Das essbare Kauzeug für ein Haustier, wie in einem der Ansprüche 6 - 8 angegeben, wobei:
das genannte essbare kaubare Material Trockenfleisch aus Fleisch und Trockenfleisch aus Hühnerfleisch ist.

10. Das essbare Kauzeug für ein Haustier, wie in Anspruch 1 angegeben, wobei:
das genannte auf Fleisch basierende Material bezogen auf das Gewicht wenigstens 35 % Fleischbestandteil in der Rezeptur des auf Fleisch basierenden Materials umfasst.

11. Das essbare Kauzeug für ein Haustier, wie in Anspruch 1 angegeben, wobei:
das genannte Additiv einen Füllstoff umfasst.

## Revendications

1. Accessoire comestible à mâcher pour animal domestique, comprenant :
une feuille à mâcher de produit à base de viande, dans laquelle ledit produit à base de viande comprend au moins 1/3 d'ingrédient de viande dans la formule dudit produit à base de viande en poids, moins d'1/2 d'ingrédient végétal dans la formule dudit produit à base de viande en poids et un additif, dans laquelle ladite feuille à mâcher ne contient pas de peau crue, dans laquelle ladite feuille à mâcher ne contient pas de peau de porc ;
dans laquelle ledit ingrédient végétal dudit produit à base de viande représente moins d'1/2 de la formule en poids, afin de garantir l'attrait intrinsèque, l'attractivité et l'intérêt masticatoire dudit accessoire comestible à mâcher pour animal domestique.

2. Accessoire comestible à mâcher pour animal domestique selon la revendication 1, dans lequel :
ledit additif est sélectionné dans le groupe constitué d'un épaississant, d'un humidifiant, d'un stabilisateur, d'un émulsifiant, d'un agent gélatinisant et d'un agent liant de façon à fournir audit produit à base de viande suffisamment de solidité et de flexibilité ;
ledit ingrédient de viande est sélectionné dans le groupe constitué de : viande crue, viande animale, poulet, porc, boeuf, viande de canard, oie, viande de dinde, viande de volaille, poisson, pénis d'animaux, viscères d'animaux, foies d'animaux, poumons d'animaux, coeurs d'animaux et graisse animale.

3. Accessoire comestible à mâcher pour animal domestique selon l'une quelconque des revendications 1-2, dans lequel :
ledit additif comprend un agent de remplissage ;
ledit agent de remplissage est sélectionné dans le groupe constitué de : matière végétale, matière issue de produits végétaux, protéine végétale et amidon végétal.

4. Accessoire comestible à mâcher pour animal domestique selon l'une quelconque des revendications 1-3, dans lequel :
ledit ingrédient de viande de la formule dudit produit à base de viande représente 50 à 95 %.

5. Accessoire comestible à mâcher pour animal domestique selon l'une quelconque des revendications 1-4, dans lequel :
ladite feuille à mâcher est pliée ou roulée dans le sens longitudinal par rapport à une feuille pliée qui est nouée aux première et deuxième extrémités longitudinales ; lesdites première et deuxième extrémités longitudinales ayant des noeuds.

6. Accessoire comestible à mâcher pour animal domestique selon l'une quelconque des revendications 1-5, comprenant en outre un élément d'un produit comestible à mâcher, dans lequel :
ladite feuille à mâcher de produit à base de viande forme une couche extérieure dudit accessoire comestible à mâcher pour animal domestique ;
ledit produit comestible à mâcher est enveloppé ou placé dans ladite feuille à mâcher pour renforcer l'attrait et l'attractivité ou l'intérêt nutritionnel dudit accessoire comestible à mâcher pour animal domestique ;
ledit produit comestible à mâcher enveloppé dans ladite feuille à mâcher est totalement recouvert par ladite feuille à mâcher sans exposition ou est partiellement recouvert avec exposition.

7. Accessoire comestible à mâcher pour animal domestique selon l'une quelconque des revendications 1-6, dans lequel :
un élément de ladite feuille à mâcher est plié ou enroulé dans le sens longitudinal avec un autre élément dudit produit comestible à mâcher par rapport à une feuille pliée qui est nouée aux première et deuxième extrémités longitudinales, lesdites première et deuxième extrémités longitudinales ayant des noeuds.

8. Accessoire comestible à mâcher pour animal domestique selon l'une quelconque des revendications 6-7, dans lequel :
ledit produit comestible à mâcher est sélectionné dans le groupe constitué de :
viande animale séchée ou fumée, poulet, porc, boeuf, viande de canard, oie, viande de dinde, viande de volaille, poisson, pénis d'animaux, viscères d'animaux, foies d'animaux, poumons d'animaux, coeurs d'animaux, graisses animales, fruits, légumes séchés, carottes, patates douces, biscuits, viande séchée et poulet séché.

9. Accessoire comestible à mâcher pour animal domestique selon l'une quelconque des revendications 6-8, dans lequel :
ledit produit comestible à mâcher est de la viande séchée ou du poulet séché.

10. Accessoire comestible à mâcher pour animal domestique selon la revendication 1, dans lequel :
ledit produit à base de viande comprend au moins 35 % d'ingrédient de viande dans la formule dudit produit à base de viande en poids.

11. Accessoire comestible à mâcher pour animal domestique selon la revendication 1, dans lequel :
ledit additif comprend un agent de remplissage.
